# FASCICULE DE BREVET EUROPEEN

(11) **EP 3 335 824 B1**
(45) Date de publication et mention de la délivrance du brevet: **16.03.2022**
(21) Numéro de dépôt: 17206215.0
(22) Date de dépôt: 08.12.2017
(51) Int. Cl.: B23K 11/30

(54) **SYSTÈME POUR EXTRAIRE UNE ÉLECTRODE À SOUDER**
SYSTEM ZUM ABZIEHEN EINER SCHWEISSELEKTRODE
SYSTEM FOR EXTRACTING A WELDING ELECTRODE

(30) Priorité: 15.12.2016 FR 1662553
(43) Date de publication de la demande: 20.06.2018
(73) Titulaire: A.M.D.P., 78290 Croissy Sur Seine (FR)
(72) Inventeur: CELIER, Alexandre, 1640 RHODE ST GENESE (BE); CORDIER, Frédéric, 78610 LE PERRAY EN YVELINES (FR)
(74) Mandataire: Mazabraud, Xavier

(56) Documents cités:
- DE-A1- 10 202 827
- FR-A1- 2 683 172

## Description

La présente invention se rapporte notamment au domaine des pinces à souder et plus particulièrement à un système pour remplacer une électrode sur une telle pince, lorsque l'électrode est usée. Un tel système, en accord avec le préambule de la revendication 1, est décrit dans le document FR2 683 172.

Ces électrodes sont généralement montées en force par un système de cône d'emmanchement, à l'extrémité d'une pince à souder par points.

Le but de l'invention est de proposer un système pour changer une électrode qui puisse être mis en œuvre automatiquement.

Pour atteindre son but, l'invention propose un système pour extraire une électrode d'une pince à souder par points selon la revendication 1.

Les moyens de commande comprennent avantageusement un index, fixé sur le mors commandé, et une came formant un parcours fermé autour de l'axe principal. La came peut comprendre une gorge apte à être parcourue par l'index. Le mors commandé peut être monté en rotation autour d'un axe fixe relativement au châssis et l'index être fixé à une extrémité libre de ce mors, l'index ayant de préférence une forme de goupille sensiblement cylindrique. Le passage peut comprendre un orifice ayant un secteur de rayon rétréci relativement à l'axe principal de sorte que dans une position d'ouverture de la mâchoire l'autre mors est escamoté au-delà d'un bord de l'orifice.

L'axe principal est avantageusement sensiblement vertical. Dans ce cas, le passage peut comprendre un orifice d'entrée pour l'électrode, disposé au-dessus de la mâchoire et un orifice de sortie disposé sous la mâchoire pour permettre l'évacuation gravitaire de l'électrode, lorsqu'elle a été extraite.

Plusieurs modes d'exécution de l'invention seront décrits ci-après, à titre d'exemples non limitatifs, en référence aux dessins annexés dans lesquels :
- la figure 1 est une vue partielle en perspective d'un appareil pour le remplacement automatique d'une électrode d'une pince à souder par point ;
- la figure 2 est une vue schématique en coupe horizontale selon le plan II-II de la figure 3 d'un premier mode de réalisation d'un système selon l'invention pour extraire l'électrode, équipant l'appareil de la figure 1 ;
- la figure 3 est une vue schématique en coupe verticale selon le plan III-III repéré aux figure 1, 2 et 4, du système d'extraction ;
- la figure 4 est une vue schématique en coupe horizontale selon le plan IV-IV de la figure 3, du système d'extraction ;
- les figures 5 à 7 sont des vues horizontales similaires aux figures 2 et 4 combinées, illustrant trois étapes de l'extraction de l'électrode à l'aide du système d'extraction des figures 2 à 4; et,
- la figure 8 est une figure similaire à celle de la figure 4, illustrant un deuxième mode de réalisation pour un système d'extraction selon l'invention.

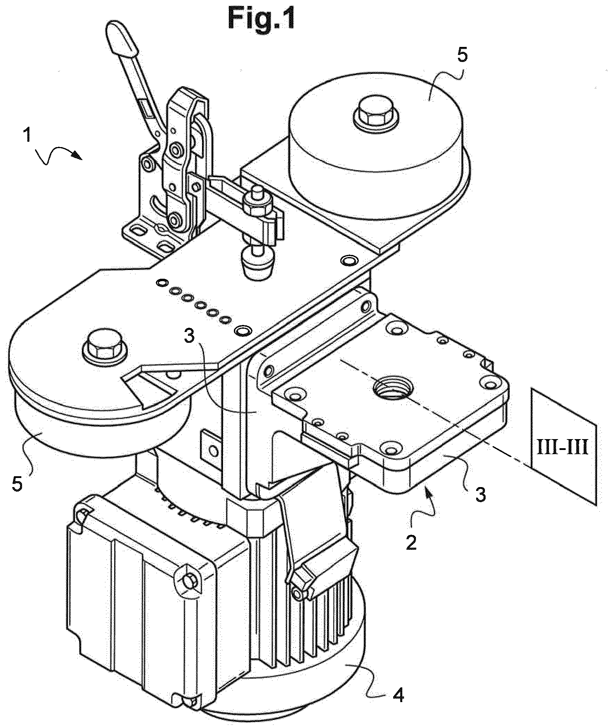

La figure 1 illustre un appareil 1 pour le remplacement automatique d'une électrode d'une pince à souder par point. Cet appareil comprend notamment un système 2 pour extraire une électrode d'une pince à souder par point. Il comprend aussi un motoréducteur 4 et deux barillets 5 contenant des électrodes neuves. Le système 2 comprend une base 3 en forme d'équerre qui le solidarise avec le motoréducteur 4. Dans l'exemple illustré, le moteur est un moteur électrique.

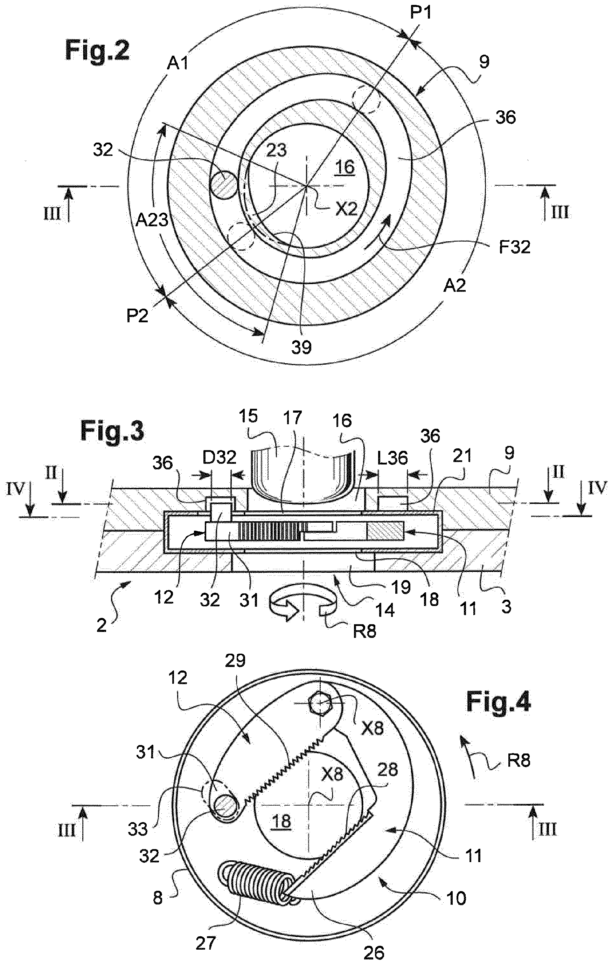

Les figures 2 à 4 sont des vues partielles du système d'extraction 2 mettant en valeur ses principaux éléments. Comme illustré à la figure 3, le support 3 sert de basse au système 2.

Un boitier 8 sensiblement cylindrique est monté rotatif sur la base 3, selon un sens de rotation R8, autour d'un axe principal X2, vertical. Cet axe X2 est fixe relativement à la base 3. Le système comprend en outre des moyens de transmission, non représentés, pour transmettre le mouvement du motoréducteur 4 au boîtier 8.

Un capot 9 est fixé sur la base 3. Le boîtier 8 est logé entre la base et le capot. Le boîtier 8 sert de châssis à une mâchoire 10. La mâchoire 10 comprend un mors mobile 11 et un mors commandé 12, tous deux articulés autour d'un axe de mâchoire X8 commun ou non, vertical. Le ou les axes de mâchoire sont solidaires en rotation du boîtier 8, le boîtier et la mâchoire constituant ensemble un dispositif de mâchoire rotative 8,10. La mâchoire est prévue pour saisir l'électrode 15 et l'entrainer en rotation afin de craquer l'emmanchement de l'électrode, c'est-à-dire de la désolidariser de la pince.

Le système 2 est traversé verticalement par un passage 14 pour l'électrode 15. Comme illustré à la figure 3, l'électrode est prévue pour être introduite dans le système 2 par le haut du passage 14 ; dans l'exemple illustré, elle est ensuite éjectée gravitairement par le bas du passage 14, après avoir été extraite. Le passage comprend plusieurs orifices 16-19 coaxiaux autour de l'axe principal X2:
- un orifice d'entrée 16, formé dans le capot 9 ;
- un orifice supérieur 17, formé dans une paroi supérieure 21 du boîtier ;
- un orifice inférieur 18, formé dans une paroi inférieure 22 du boîtier ; et,
- un orifice de sortie 19, formé dans la base 3.

Tous les orifices sont de forme sensiblement circulaire autour de l'axe principal X2, sauf l'orifice d'entrée 16 et l'orifice de sortie 19 qui comprennent une forme de demi-lune qui empiète sur leur ouverture, c'est-à-dire que la demi-lune forme un rétrécissement radial de cette ouverture, sur un secteur angulaire A23, autour de l'axe principal X2. A la figure 2, le périmètre théorique de l'orifice 16 est représenté avec un trait mixte, le périmètre réel est représenté en trait plein.

Le mors mobile 11 comprend une extrémité libre 26, opposée à son axe X8. L'extrémité libre 26 est fixée à des moyens élastiques, ici un ressort hélicoïdal 27, qui sont eux-mêmes fixés au boîtier 8. Ces moyens élastiques autorisent une légère rotation du mors mobile 11 autour de son axe X8 et donc un ajustement du mors au diamètre et à la position radiale de l'électrode 15 à extraire. Ceci permet aussi d'assurer un serrage sensiblement constant sur l'électrode, à mesure que le mors commandé 12 se rapproche de l'axe principal X2. Dans l'exemple illustré, le mors mobile 11 comprend une rangée de dents 28, dites en « dent de loup », c'est-à-dire qu'elles sont dissymétriques et disposées pour pénétrer la surface de l'électrode lorsque la mâchoire tourne selon la direction de rotation R8. Les dents 28 ont chacune une crête sensiblement verticale.

Le mors commandé 12 comprend une rangée de dents 29, dites « dents droites » c'est-à-dire qu'elles sont symétriques et disposées pour pénétrer radialement la surface de l'électrode. Les dents 29 ont chacune une crête sensiblement verticale. Le mors commandé comprend en outre, à une extrémité libre 31 opposée à son axe X8, un index 32. La paroi supérieure 21 du boîtier comprend une fenêtre oblongue 33. L'index s'étend verticalement vers le haut, au-delà de la paroi supérieure 21, au travers de la fenêtre 33. Dans l'exemple illustré, l'index est une goupille cylindrique de diamètre D32, mesuré horizontalement.

Le capot 9 comprend, une gorge 36 s'étendant horizontalement en vis-à-vis de la paroi supérieure 21 ; elle forme une boucle autour de l'axe principal X2, c'est-à-dire qu'elle est horizontalement fermée sur elle-même. La gorge est de section rectangulaire et ouverte vers le bas. Elle a une largeur horizontale L36 sensiblement constante et voisine du diamètre D32 de l'index 32, de façon que l'index puisse la parcourir en y glissant de façon ajustée. Ainsi, le capot 9 constitue une came pour le mors commandé 10 et la gorge 36 constitue un chemin de came 36, qui définit un parcours pour l'index 32. Le parcours est fermé, c'est-à-dire que, la gorge formant une boucle fermée, l'index 32 retrouve sa place initiale dans la gorge, chaque fois que la mâchoire 10 fait un tour complet autour de l'axe principal X2.

Le sens du parcours de l'index 32 dans la gorge 36, illustré à la figure 2 par la flèche F32, est directement lié au sens de rotation R8 de la mâchoire 10. Suivant sa position autour de l'axe principal X2, la gorge est plus où moins éloignée de cet axe. Ainsi, suivant sa position dans la gorge, l'index est plus ou moins éloigné de l'axe X2. Plus l'index est près de l'axe X2, plus le mors commandé en est proche aussi, et plus la mâchoire est donc fermée. Plus l'index est loin de l'axe X2, plus le mors commandé en est loin aussi, et plus la mâchoire est donc ouverte.

Ainsi, l'index 32 peut prendre, dans la gorge, une position distale, matérialisée à la figure 2 par la demi-droite P1, et une position proximale, matérialisée à la figure 2 par la demi-droite P2. Les demi-droites sont séparées l'une de l'autre d'une part par un premier secteur angulaire A1 et d'autre part par un deuxième secteur angulaire A2. Dans l'exemple illustré, le secteur angulaire A23 délimitant la demi-lune 23, s'étend de part et d'autre de la position proximale P2. La position distale correspond à une position d'ouverture maximale pour la mâchoire 10. La position proximale correspond à une position de fermeture maximale pour la mâchoire 10. Aux figures 2 à 4, l'index est représenté dans une position voisine de la position proximale et la mâchoire dans une position de fermeture voisine de la position de fermeture maximale.

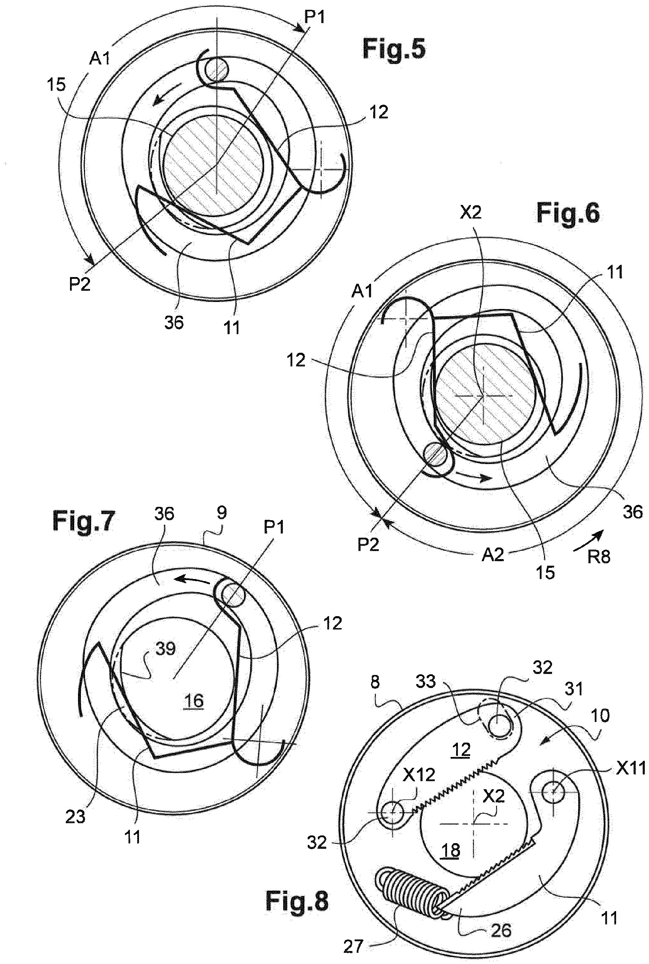

On va maintenant décrire le fonctionnement du système 2 en référence aux figures 5 à 7, auxquelles les mors sont représentées de façon simplifiée et partielle.

Le système 2 est prévu pour que l'électrode 15 puisse être introduite lorsque l'index est dans une position voisine de la position distale. Lorsque l'index 32 parcourt la gorge 36 selon le sens F32, depuis la position distale P1, il parcourt d'abord le premier secteur A1, passe par la position proximale P2, puis parcourt le deuxième secteur A2 jusqu'à revenir à la position distale P1.

La figure 5 illustre une position P5 du premier secteur A1. Pour cette position P5, les mors 11, 12 sont en cours de fermeture de part et d'autre de l'électrode 15 ; ils sont encore largement ouverts et ne sont pas en contact avec l'électrode.

La figure 6 illustre la position proximale P2. Les mors 11, 12 sont en prise avec l'électrode 15, de sorte qu'ils l'entrainent en rotation R8 autour de l'axe principal X2. Cette rotation provoque le décollement du cône d'emmanchement de l'électrode, de sorte qu'elle est immédiatement désolidarisée de la pince.

La figure 7 illustre le retour à la position distale P2. Les mors 11, 12 sont largement ouverts. Le mors mobile 11 est masqué par la demi-lune 23. L'électrode a été relâchée ; elle a été évacuée gravitairement au travers de l'orifice inférieur 18 et de l'orifice de sortie 19.

La demi-lune permet de séparer le mors mobile 11 de l'électrode. En effet, les dents 28 de ce mors 11 permettent d'avoir une prise suffisamment assurée sur l'électrode pour pouvoir l'entrainer en rotation et craquer l'emmanchement par cône. Les dents 28 du mors 11 peuvent être avoir une telle prise sur l'électrode que celle-ci ne puisse s'en détacher sous son seul poids. Lorsque l'index approche de la position distale, le mors mobile 11 est escamoté par la demi-lune 23 alors que l'électrode est retenue radialement par un bord intérieur 39 de cette demi-lune, suffisamment pour désolidariser l'électrode et les dents 28 du mors mobile, si nécessaire. La mâchoire est ainsi libérée et peut de nouveau être réutilisée.

La figure 8 illustre un autre mode de réalisation pour la mâchoire 10. Dans ce mode de réalisation, chaque mors 11, 12 est articulé autour d'un axe respectif X11, X12, les deux axes sont presque diamétralement opposés, de part et d'autre de l'axe principal X2. Les extrémités libres 26, 31 respectives des deux mors 11, 12 sont, elles aussi, presque diamétralement opposées, de part et d'autre de l'axe principal X2.

Bien sûr, l'invention n'est pas limitée aux modes de réalisation préférés qui viennent d'être décrits mais, au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, le mors mobile peut être monté en translation radiale relativement au boîtier, et le ressort peut être un ressort lame, qui tend à déplacer le mors en direction de l'axe principal. Par ailleurs, au lieu d'avoir des dents de loup, le mors mobile peut avoir des dents droites. De même, les dents du mors commandé, peuvent ne pas être droites.

L'axe principal peut aussi ne pas être vertical. Il peut être horizontal ou prendre toute autre position. Dans le cas d'un axe horizontal, l'électrode n'est pas évacuée gravitairement, mais par la pince de soudage.

Le boitier peut être fixé sur, ou former une seule pièce avec, un pignon entrainé par le motoréducteur.

## Revendications

1. Système (2) pour extraire une électrode (15) d'une pince à souder par points, comprenant :
- une base (3) ;
- un châssis (8) monté en rotation (R8) relativement à la base (3) autour d'un axe principal (X2) ; et **caractérisé en ce qu'**il comprend en outre:
- une mâchoire (10) fixée sur ledit châssis (8) de sorte qu'il entraine ladite mâchoire en rotation, ladite mâchoire comprenant un mors commandé (12) et un mors mobile (11) tous deux articulés autour d'un axe de mâchoire (X8,X11) commun ou non, parallèle audit axe principal (X2), montés sensiblement en vis-à-vis l'un de l'autre de part et d'autre de l'axe principal (X2), ladite mâchoire pouvant prendre une position d'ouverture (P1), dans laquelle le mors commandé est éloigné dudit axe et une position de fermeture dans laquelle ledit mors est proche dudit axe principal (X2) ;
- des moyens (32, 36) pour commander le mors commandé (12) de sorte que lorsque le châssis fait un tour autour de l'axe principal (X2) ce mors (12) se rapproche puis s'éloigne dudit axe principal (X2) ;
- un passage (14) prévu pour introduire l'électrode (15) entre lesdits mors (11, 12); et,
- des moyens élastiques pour autoriser une rotation dudit mors mobile autour de son axe (X8, X11), lesdits moyens élastiques étant fixés d'une part à une extrémité libre (26) dudit mors mobile (11) opposée audit axe (X8, X11) et d'autre part audit châssis (8); de façon à autoriser un ajustement dudit mors mobile à un diamètre et à une position radiale de l'électrode à extraire.

2. Système selon la revendication 1, **caractérisé en ce que** les moyens de commande (32, 36) comprennent un index fixé sur le mors commandé (12) et une came (9) formant un parcours fermé autour de l'axe principal (X2).

3. Système selon la revendication 2, **caractérisé en ce que** la came comprend une gorge (36) apte à être parcourue par l'index.

4. Système selon l'une des revendications 2 ou 3, **caractérisé en ce que** le mors commandé (12) est monté en rotation autour d'un axe (X8) fixe relativement au châssis (8) et **en ce que** l'index (32) est fixé à une extrémité libre dudit mors, ledit index ayant de préférence une forme de goupille sensiblement cylindrique.

5. Système selon l'une des revendications 1 à 4, **caractérisé en ce que** le passage (14) comprend un orifice (16) ayant un secteur (A23) de rayon rétréci relativement à l'axe principal (X2) de sorte que dans une position d'ouverture de la mâchoire (10) le mors mobile (11) soit escamoté au-delà d'un bord 39 dudit orifice.

6. Système selon l'une des revendications 1 à 5, **caractérisé en ce que** l'axe principal (X2) est sensiblement vertical.

7. Système selon la revendication 6 **caractérisé en ce que** le passage (14) comprend un orifice d'entrée (16) pour l'électrode, disposé au-dessus de la mâchoire (10) et un orifice de sortie (19) disposé sous la mâchoire (10), pour permettre l'évacuation gravitaire de ladite électrode lorsqu'elle a été extraite.

8. Système selon l'une des revendications 1 à 7 , **caractérisé en ce que** le mors mobile (11) comprend une rangée de dents (28), dissymétriques et disposées pour pénétrer la surface de l'électrode lorsque la mâchoire tourne selon une direction de rotation (R8) autour de l'axe principal (X2).

## Patentansprüche

1. System (2) zum Abziehen einer Elektrode (15) von einer Punktschweißzange, umfassend:
- eine Basis (3);
- ein Gestell (8), das für eine Drehung (R8) relativ zur Basis (3) um eine Hauptachse (X2) montiert ist;
**dadurch gekennzeichnet, dass** das System ferner umfasst:
- eine Klaue (10), die an dem Gestell (8) derart befestigt ist, dass dieses die Klaue drehend antreibt, wobei die Klaue eine gesteuerte Backe (12) und eine bewegliche Backe (11) aufweist, die beide um eine gemeinsame oder nicht gemeinsame, zur Hauptachse (X2) parallele Klauenachse (X8, X11) gelenkig miteinander verbunden sind und beidseits der Hauptachse (X2) einander im Wesentlichen einander gegenüberliegend montiert sind, wobei die Klaue eine Öffnungsposition (P1) einnehmen kann, in der die gesteuerte Backe von der Achse entfernt ist, und eine Schließposition, in der die Backe nahe der Hauptachse (X2) liegt;
- Mittel (32, 36) zur Steuerung der gesteuerten Backe (12) derart, dass sich diese Backe (12) auf die Hauptachse (X2) zu und wieder von dieser weg bewegt, wenn das Gestell eine Umdrehung um die Hauptachse (X2) macht;
- einen Durchlass (14) zum Einführen der Elektrode (15) zwischen die Backen (11, 12); und
- elastische Mittel zum Ermöglichen einer Drehung der beweglichen Backe um ihre Achse (X8, X11), wobei die elastischen Mittel einerseits an einem der Achse (X8, X11) gegenüberliegenden freien Ende (26) der beweglichen Backe (11) und andererseits an dem Gestell (8) befestigt sind, derart, dass die bewegliche Backe auf einen Durchmesser und eine radiale Position der abzuziehenden Elektrode einstellbar ist.

2. System nach Anspruch 1, **dadurch gekennzeichnet, dass** die Steuerungsmittel (32, 36) einen festen Zeiger an der gesteuerten Backe (12) und einen Nocken (9) umfassen, der eine geschlossene Bahn um die Hauptachse (X2) bildet.

3. System nach Anspruch 2, **dadurch gekennzeichnet, dass** der Nocken eine Nut (36) aufweist, die von dem Zeiger durchwandert wird.

4. System nach einem der Ansprüche 2 oder 3, **dadurch gekennzeichnet, dass** die gesteuerte Backe (12) um eine relativ zu dem Gestell (8) feststehende Achse (X8) drehbar montiert ist und dass der Zeiger (32) an einem freien Ende der Backe befestigt ist, wobei der Zeiger vorzugsweise eine Form eines im Wesentlichen Zylindrischen Stifts aufweist.

5. System nach einem der Ansprüche 1 bis 4, **dadurch gekennzeichnet, dass** der Durchlass (14) eine Öffnung (16) mit einem Sektor (A23) eines Radius aufweist, der relativ zur Hauptachse (X2) verkleinert ist, so dass in einer Öffnungsposition der Klaue (10) die bewegliche Backe (11) bis hinter einen Rand (39) der Öffnung eingezogen ist.

6. System nach einem der Ansprüche 1 bis 5, **dadurch gekennzeichnet**, das die Hauptachse (X2) im Wesentlichen vertikal ist.

7. System nach Anspruch 6, **dadurch gekennzeichnet, dass** der Durchlass (14) eine oberhalb der Klaue (10) angeordnete Eintrittsöffnung (16) für die Elektrode und eine unterhalb der Klaue (10) angeordnete Austrittsöffnung (19) aufweist, um eine Entnahme der Elektrode durch Schwerkraft zu ermöglichen, wenn die Elektrode abgezogen wird.

8. System nach einem der Ansprüche 1 bis 7, **dadurch gekennzeichnet, dass** die mobile Backe (11) eine Reihe von Zähnen (28) aufweist, die unsymmetrisch sind und angeordnet sind zum Eindringen in die Oberfläche der Elektrode, wenn sich die Klaue gemäß einer Drehrichtung (R8) um die Hauptachse (X2) dreht.

## Claims

1. System (2) for extracting an electrode (15) from a spot welding tong, comprising:
- a base (3);
- a frame (8) mounted such that it rotates (R8) relative to the base (3) about a main axis (X2); and **characterised in that** it further comprises:
- a jaw assembly (10) fixed to said frame (8) such that it drives said jaw assembly in rotation, said jaw assembly comprising a controlled jaw (12) and a movable jaw (11), both articulated about a common or non-common jaw assembly axis (X8, X11), parallel to said main axis (X2), and mounted substantially opposite one another on either side of the main axis (X2), said jaw assembly being able to assume an open position (PI), in which the controlled jaw is at a distance from said axis, and a closed position in which said jaw is close to said main axis (X2);
- means (32, 36) for controlling the controlled jaw (12) such that, as the frame rotates about the main axis (X2), this jaw (12) moves towards and then away from said main axis (X2);
- a passage (14) provided for inserting the electrode (15) between said jaws (11, 12); and
- resilient means for allowing said movable jaw to rotate about the axis (X8, XI1) thereof, said resilient means being fixed on the one hand to a free end (26) of said movable jaw (11) opposite said axis (X8, X11) and on the other hand to said frame (8); so as to allow said movable jaw to be adjusted to a diameter and a radial position of the electrode to be extracted.

2. System according to claim 1, **characterised in that** the control means (32, 36) comprise an index fixed to the controlled jaw (12) and a cam (9) forming a closed path around the main axis (X2).

3. System according to claim 2, **characterised in that** the cam comprises a groove (36) through which the index can pass.

4. System according to one of claims 2 or 3, **characterised in that** the controlled jaw (12) is mounted such that it can rotate about an axis (X8) that is fixed relative to the frame (8) and **in that** the index (32) is fixed to a free end of said jaw, said index preferably having a substantially cylindrical pin shape.

5. System according to one of claims 1 to 4, **characterised in that** the passage (14) comprises an orifice (16) having a sector (A23) of narrowed radius relative to the main axis (X2) such that in an open position of the jaw assembly (10), the movable jaw (11) is retracted beyond an edge (39) of said orifice.

6. System according to one of claims 1 to 5, **characterised in that** the main axis (X2) is substantially vertical.

7. System according to claim 6, **characterised in that** the passage (14) comprises an inlet orifice (16) for the electrode, disposed above the jaw assembly (10) and an outlet orifice (19) disposed below the jaw assembly (10), to allow said electrode to be removed by gravity when it has been extracted.

8. System according to one of claims 1 to 7, **characterised in that** the movable jaw (11) comprises a row of asymmetric teeth (28), disposed so as to penetrate the surface of the electrode as the jaw assembly rotates in a direction of rotation (R8) about the main axis (X2).
